# EUROPÄISCHE PATENTSCHRIFT

(11) **EP 1 076 622 B1**
(45) Veröffentlichungstag und Bekanntmachung des Hinweises auf die Patenterteilung: **27.04.2005**
(21) Anmeldenummer: 99960872.2
(22) Anmeldetag: 09.11.1999
(51) Int. Cl.: B60S 1/38

(54) **WISCHBLATT ZUM REINIGEN VON FAHRZEUGSCHEIBEN UND VERFAHREN ZUM MONTIEREN DES WISCHBLATTS**
WIPER BLADE FOR CLEANING VEHICLE PANES AND METHOD FOR MOUNTING SAID WIPER BLADE
RACLETTE D'ESSUIE-GLACE SERVANT A NETTOYER DES VITRES DE VEHICULES ET SON PROCEDE DE MONTAGE

(30) Priorität: 06.03.1999 DE 19909971
(43) Veröffentlichungstag der Anmeldung: 21.02.2001
(73) Patentinhaber: ROBERT BOSCH GMBH, 70442 Stuttgart (DE)
(72) Erfinder: KOTLARSKI, Thomas, D-53474 Bad Neuenahr (DE); DE BLOCK, Peter, B-3545 Halen (BE)
(86) Internationale Anmeldenummer: PCT/DE1999/003565
(87) Internationale Veröffentlichungsnummer: WO 2000/053470

(56) Entgegenhaltungen:
- EP-A- 0 783 998
- DE-A- 19 627 115
- GB-A- 2 191 083

## Beschreibung

### Stand der Technik

Bei Wischblättern der im Oberbegriff des Anspruchs 1 bezeichneten Art sollen die Tragschienen über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung der unbelasteten Tragschienen - also wenn das Wischblatt nicht an der Scheibe anliegt - werden die Enden der im Betrieb des Wischblatts vollständig an der Scheibe angelegten Wischleiste durch die dann gespannten Tragschienen zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessenen stärkste Krümmung. Die Tragschienen ersetzen somit die aufwendige Tragbügelkonstruktion mit zwei in der Wischleiste angeordneten Federschienen, wie sie bei herkömmlichen Wischblättern praktiziert wird (DE-OS 15 05 357).

Die Erfindung geht aus von einem Wischblatt nach dem Oberbegriff des Anspruchs 1. Bei einem bekannten Wischblatt dieser Art (DE 19 62 71 15.0 A1) ist der aus Metallblech gefertigte Halter mit zur Krallenbildung vorgesehenen Biegelappen versehen, welche nach dem Aufsetzen des Halters auf die oberen Bandflächen der Tragschienen nach innen umgebogen werden, so daß sie mit ihren Enden ihre jeweiligen Tragschienen untergreifen. Wenn die Wischleiste abgenutzt ist muß das komplette Wischblatt ersetzt werden, auch wenn die Tragschienen und der Halter noch keine Mängel aufweisen. Im Hinblick auf die Betriebssicherheit des Wischblatts dürfen nämlich die Biegelappen nicht zurückgebogen und nach Austausch der genutzten Wischleiste erneut nach innen umgebogen werden.

### Vorteile der Erfindung

Bei dem erfindungsgemäßen Wischblatt mit den kennzeichnenden Merkmalen des Anspruchs 1 wird die mit den Tragschienen versehene Wischleiste beim Einsetzen der Wischleiste in den Halter durch die im Längssteg erzeugte Spannung gehalten, welche durch die Maßdifferenz zwischen dem Abstand der ersten L-Schenkel voneinander und dem Summenmaß entsteht, wenn der Längssteg zusammengedrückt wird. Dadurch ist es möglich die Wischleiste ohne Verformung der Krallen aus dem Halter entgegen der Montagerichtung unter elastischer Verformung der oberen Wände der Aufnahmenuten herauszuziehen. Sowohl die Tragschienen als auch der Halter bleiben voll funktionsfähig und können deshalb ohne Einschränkung weiter verwendet werden.

Auf die Krallen des Halters abgestimmte Aussparungen in der Wischleiste können entfallen, wenn die beiden Tragschienen jeweils zumindest über einen Längsabschnitt mit einem Randstreifen aus ihren Aufnahmenuten ragen und die zweiten L-Schenkel an der der Scheibe zugewandten unteren Bandfläche ihrer Tragschienen angreifen.

Ein einfacher, kostengünstiger Aufbau des Halters wird dadurch erreicht, daß der Halter einen plattenartigen, sich an den oberen Bandflächen der Tragschienen abstützenden Körper aufweist, mit dessen einander gegenüberliegenden Längsseiten die ersten L-Schenkel der Krallen verbunden sind.

Zur festen, betriebssicheren Befestigung des Halters an den Tragschienen sind die Krallen an den Längsseiten einander gegenüberliegend paarweise angeordnet.

Wenn der Körper des Halters an seiner den oberen Bandflächen der beiden Tragschienen zugewandten Unterseite mit einer Längsaussparung zum Aufnehmen einer die Breite der beiden Aufnahmenuten begrenzenden Deckleiste der Wischleiste versehen ist, wird die Bauhöhe des Wischblatts verringert, was Vorteile beim Wischbetrieb mit sich bringt.

In Fortbildung des Erfindungsgedankens ist der Halter mit Mitteln zum Anschließen des Wischerarms versehen.

Ein besonders betriebssicherer Sitz des Halters an der mit den Tragschienen versehenen Wischleiste ergibt sich dadurch, daß die unteren Bandflächen der beiden Tragschienen mit einander einen Winkel einschließen der kleiner als 180° ist.

Je nach den an den Halter gestellten speziellen Anforderungen kann dieser mit Vorteil aus einem Kunststoff oder aus Metall hergestellt sein.

Um dem Verbund - bestehend aus den beiden Tragschienen und der Wischleiste - bei Material schonender Anpresskraft auch mit zunehmendem Altern der Wischleiste in Längsrichtung des Wischblatts ordnungsgemäß zu fixieren ist jede Tragschiene an ihren dem Längssteg der Wischleiste zugewandten Innen-Längskanten mit wenigstens einem Vorsprung versehen.

Je nach den Wischblatt spezifischen Forderungen kann es von Vorteil sein, wenn dem Vorsprung der einen Tragschiene der Vorsprung der anderen Tragschiene gegenüber liegt bzw. wenn der Vorsprung der einen Tragschiene zu dem Vorsprung der anderen Tragschiene in deren Längsrichtung versetzt angeordnet ist.

In bestimmten Anwendungsfällen kann es auch von Vorteil sein, wenn dem Vorsprung der einen Tragschiene ein Rücksprung der anderen Tragschiene gegenüber liegt.

Das Wischblatt gemäß einem der Ansprüche 1 bis 13 ermöglicht ein besonders vorteilhaftes Verfahren zum Montieren des Wischblatts, bei dem in einem ersten Verfahrensschritt die Tragschienen in ihre Aufnahmenuten eingebracht und ihre oberen Bandflächen so gegeneinander gekippt werden, daß sie einen Winkel miteinander einschließen der kleiner als 180° ist und daß danach die Tragschienen zusammen mit der Wischleiste in den zwischen den an den einander gegenüberliegenden Längsseiten des Halters angeordneten Krallen vorhandenen Raum eingebracht werden, wo nach dem Freigeben der Tragschienen diese selbsttätig in ihre Betriebspositionen gelangen und dort zusammen mit der Wischleiste durch die sich ergebende Spannung des Längsstegs im Halter fixiert werden. Das erfindungsgemäße Montageverfahren zeichnet sich durch eine Folge von einfachen, geradlinigen Montagebewegungen aus, so daß es besonders automatenfreundlich ist.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

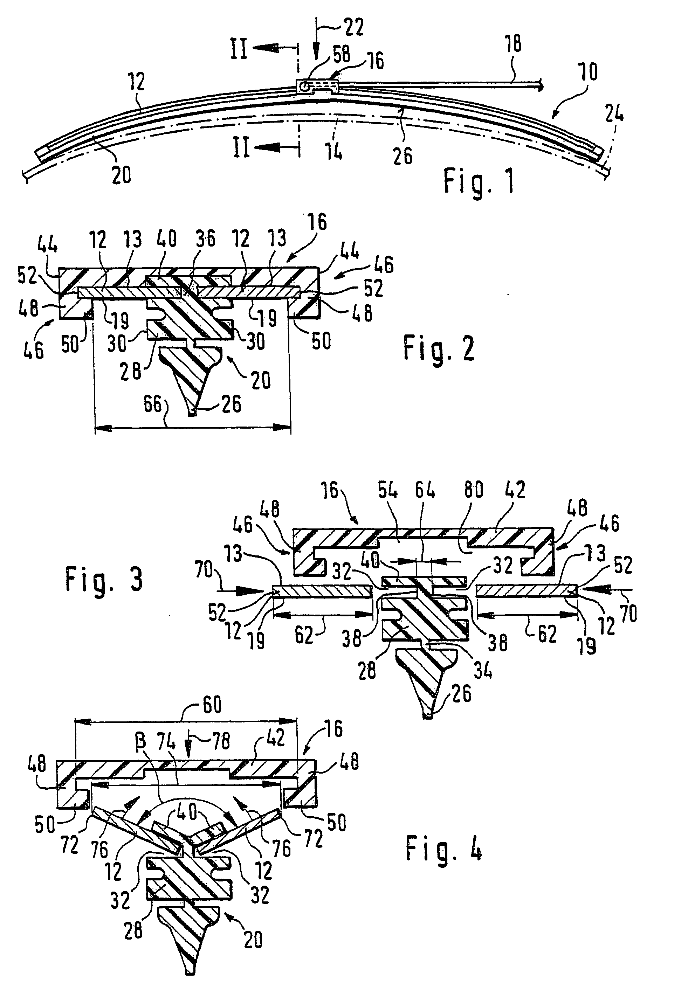

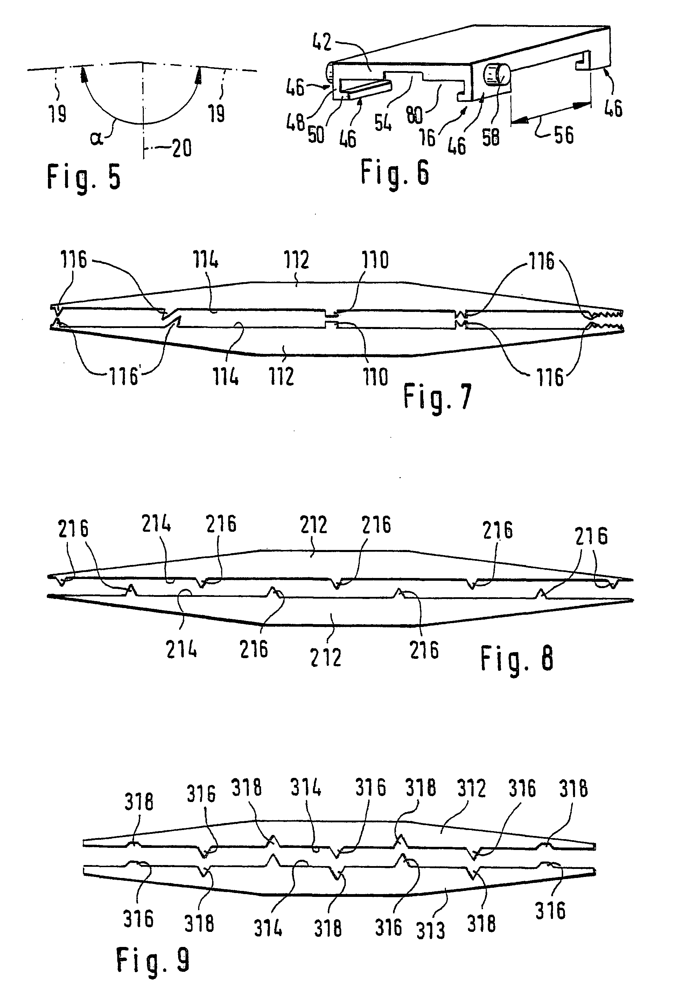

In der Zeichnung zeigen: Figur 1 eine Seitenansicht eines an einem Wischerarm angeschlossenen Wischblatts, das mit den Enden seiner Wischleiste an der zu wischenden Scheibe anliegt, Figur 2 die Schnittfläche eines Schnitts durch das Wischblatt entlang der Linie II-II in Figur 1, vergrößert dargestellt, Figur 3 die entsprechend Figur 2 dargestellten, zum Wischblatt gehörenden Einzelteile vor deren Montage, Figur 4 die Anordnung gemäß Figur 3 bei teilweise montierten Einzelteilen, Figur 5 eine schematische Darstellung der Anordnung gemäß Figur 2 jedoch bei modifizierter Position der Tragschienen, Figur 6 eine unmaßstäbliche, perspektivische Darstellung des Halters und die Figuren 7 bis 9 verschiedene Ausgestaltungen der zum Wischblatt gehörenden Tragschienen.

### Beschreibung des Ausführungsbeispiels

Ein in den Figuren 1 bis 4 dargestelltes Wischblatt 10 weist ein langgestrecktes, federelastisches Tragelement auf, zu dem zwei Tragschienen 12 gehören. An der von der in Figur 1 strichpunktiert dargestellten zu wischenden Scheibe 14 abgewandten Oberseite oder oberen Bandfläche 13 der Tragschienen 12 (Figuren 1 und 2) ist eine Anschlußvorrichtung 16 angeordnet, mit deren Hilfe das Wischblatt 10 mit einem angetriebenen Wischerarm 18 (Figur 1) lösbar verbunden werden kann. An der der Scheibe 14 zugewandten Unterseite oder unteren Bandfläche 19 der Tragschienen 12 ist eine langgestreckte, gummielastische Wischleiste 20 längsachsenparallel angeordnet. Der Wischerarm 18 ist in Richtung des Pfeiles 22 zur zu wischenden Scheibe 14 belastet, deren zu wischende Oberfläche in Figur 1 mit der Bezugszahl 24 versehen worden ist. Da die strichpunktierte Linie 24 die stärkste Krümmung der Scheibenoberfläche darstellen soll ist klar ersichtlich, daß die Krümmung des zunächst nur mit seinen beiden Enden an der Scheibe anliegenden Wischblatt 10 stärker ist als die maximale Scheibenkrümmung. Unter dem Anpressdruck (Pfeil 22) legt sich das Wischblatt mit seiner Wischlippe 26 über seine gesamte Länge an der Scheibenoberfläche 24 an. Dabei baut sich im bandartigen, federelastischen Tragelement bzw. in den beiden Tragschienen 12 eine Spannung auf, welche für eine ordnungsgemäße Anlage der Wischleiste 20 bzw. deren Wischlippe 26 über die gesamte Länge an der Kraftfahrzeugscheibe 14 sorgt.

Im folgenden soll nun auf die besondere Ausgestaltung des erfindungsgemäßen Wischblatts 10 näher eingegangen werden.

Aus der in Figur 2 dargestellten Querschnittsfläche eines Schnitts durch das Wischblatt ist ersichtlich, daß die Wischleiste 20 ein im Querschnitt blockartiges Basisteil 28 hat, in dem die beiden Tragschienen 12 der Wischleiste 20 sitzen. Dazu ist in jeder der beiden Basisteil-Längsseiten 30 eine randoffene Längsnut 32 vorgesehen (Figur 3) wobei in jeder der beiden Längsnuten eine der beiden Tragschienen 12 sitzt. An der von der als Halter für die Tragschienen 12 dienenden Anschlußvorrichtung 16 abgewandten Seite des Basisteils 28 geht dieses in einen sogenannten Kippsteg 34 über, an dem die Wischlippe 26 angeordnet ist. Zwischen den beiden in einer gemeinsamen Ebene angeordneten Längsnuten 32 verbleibt ein Längssteg 36 an dem jeweils der Nutgrund 38 der Längsnuten 32 ausgebildet ist. Zu der von der Wischlippe 26 abgewandten Seite sind die beiden Längsnuten 32 durch eine vom Basisteil 28 verbleibende Deckleiste 40 begrenzt. Der Halter 16 hat einen im wesentlichen plattenartigen, sich an den oberen Bandflächen 13 abstützenden Körper 42 an dessen Längsseiten 44 L-förmige Krallen 46 angeordnet sind (insbesondere Figur 3). Die Krallen 46 sind über ihren einen L-Schenkel 48 mit dem Körper 42 des Halters 16 einstückig verbunden. An den vom Körper 42 abliegenden, freien Ende der einen L-Schenkel 48 sind mit Abstand vom Körper 42 an jedem der beiden einen L-Schenkel 48 der andere L-Schenkel 50 angeordnet wobei sich die anderen L-Schenkel aufeinander zu erstrecken. Wie besonders deutlich aus Figur 2 ersichtlich ist, queren die einen L-Schenkel 48 des Halters 16 die Außenkanten 52 der Tragschienen 12 so daß die anderen L-Schenkel 50 der Krallen 46 die jeweilige Tragschiene 12 untergreift. Dabei ist es nicht zwingend erforderlich, daß die anderen L-Schenkel 50 die Tragschienen 12 passend umschließen. Vielmehr kann es von Vorteil sein, den Tragschienen 12 ein gewisses Spiel zwischen den einander zugewandten Flächen des Körpers 42 und der anderen L-Schenkel 50 zu belassen. Die vorgegebene, aus Figur 1 ersichtliche Krümmung der Tragschienen 12 bewirkt trotzdem die zur Montage des Wischblatts notwendige Fixierung des Halters gegenüber den Tragschienen 12. Andererseits verhindert ein gewisses Spiel der Tragschienen 12 im Halter 16 eine erwünschte Versteifung des Wischblatts 10 in dessen Mittelabschnitt. An der den oberen Bandflächen 13 der Tragschienen 12 zugewandten Unterseite des Halterkörpers 42 ist diese mit einer nutartigen Längsaussparung 54 versehen, die zum Aufnehmen der Deckleiste 40 der Wischleiste 20 dient (Figur 2).

Figur 6 zeigt, daß der Halter 16 mit einander gegenüber liegend und paarweise angeordneten Krallen 46 versehen ist. Die an derselben Längsseite des Halters vorhandenen Krallen sind mit Abstand 56 voneinander angeordnet. Es ist aber auch durchaus denkbar, an jeder Längsseite des Halters 16 nur eine einzige Kralle vorzusehen, die sich dann über die gesamte Längsseite erstrecken kann. Der Halter 16 kann zur Vereinfachung des Wischblattsaufbaus die Funktion einer Vorrichtung zum Anschließen des Wischblatts 10 an den Wischerarm 18 übernehmen. Eine der mannigfachen Ausgestaltungen einer solchen Anschlußvorrichtung 16 ist in den Figuren 1 und 6 durch an den Halter-Längsseiten 44 angeordnete Gelenkzapfen 58 dargestellt an denen entsprechende Gegengelenkmittel des Wischerarms 18 angreifen.

Die einander zugewandten Innenseiten der einen L-Schenkel 48 sind quer zur Längserstreckung des Wischblatts gemessen in einem Abstand 60 voneinander angeordnet (Figur 4). Figur 2 zeigt, daß die beiden Tragschienen 12 zumindest in ihrem Mittelabschnitt aus ihren jeweiligen Längsnuten 32 der Wischleiste 20 herausragen, weil ihre Breite 62 (Figur 3) zumindest im Mittelabschnitt größer ist als die Tiefe der Längsnuten 32. Zu bemerken ist noch, daß sich der Nutgrund 38 der einen Längsnut 32 in einem Abstand 64 vom anderen Nutgrund 38 der anderen Längsnut 32 befindet. Die Abstimmung des Abstandmaßes 60 auf das sich aus der jeweiligen Breite 62 der beiden Tragschienen 12 zuzüglich dem Abstandsmaß 64 zwischen den beiden Nutgrundflächen 38 ist so getroffen, daß das Summenmaß größer ist als das Abstandsmaß 60. So ergibt sich auch eine Sicherung der Tragschienen 12 in ihren Aufnahmenuten 32 quer zur Wischblatt-Längserstreckung.

Die Figuren 7 bis 9 stellen vorteilhafte Ausgestaltungen der dem Nutgrund 38 zugewandten Innen-Längskanten der Tragschienen dar. Zur Festlegung der Tragschienen gegenüber der Wischleiste 20 in deren Längsrichtung sind die Tragschienen mit Vorsprüngen versehen, die in Figur 7 bei den Tragschienen 12 an den Innen-Längskanten 114 angeordnet sind. Die Vorsprünge 116 selbst können wie aus Figur 7 ersichtlich verschiedene Formen aufweisen und so angeordnet sein, daß die Vorsprünge der einen Tragschiene 114 den Vorsprüngen 116 der anderen Tragschiene 114 gegenüber liegen.

Eine andere Anordnung der an den Innen-Längskanten 214 der Tragschienen 212 angeordneten Vorsprünge 216 ist in Figur 8 dargestellt. Dort sind die Vorsprünge 216 der einen Tragschiene 212 zu den Vorsprüngen 216 der anderen Tragschiene 212 in deren Längsrichtung versetzt angeordnet.

Weiter ist auch eine Ausgestaltung gemäß Figur 9 derart denkbar, daß den an den Innen-Längskanten 314 der Tragschienen 312 angeordneten Vorsprüngen 316 Rücksprünge 318 der anderen Tragschiene 313 gegenüberliegen. Selbstverständlich ist es auch hier denkbar die Formen der Vorsprünge 316 und Rücksprünge 318 entsprechend zu variieren.

Bei der Montage des Wischblatts ist besonders zu beachten, daß das Abstandsmaß 66 zwischen den einander zugewandten Flächen der anderen L-Schenkel 50 der Krallen 46 kleiner ist als das Summenmaß, gebildet durch die Addition der beiden Breitenmaße 62 der Tragschienen 12 und dem Abstandsmaß 64 zwischen den Grundflächen 38 der beiden Längsnuten 32. In einem ersten Montage- oder Verfahrensschritt müssen deshalb die beiden Tragschienen 12 in Richtung der beiden Pfeile 70 in ihre Längsnuten 32 eingebracht werden (Figur 3). Danach werden die beiden Tragschienen 12 in ihren Aufnahmenuten 32 so gegeneinander gekippt, daß ihre Oberseiten bzw. ihre oberen Bandflächen 13 einen Winkel β miteinander einschließen der kleiner als 180° ist, bis ihre Außenkanten mit einem Abstand 74 voneinander liegen, der kleiner ist als das Abstandsmaß 66 zwischen den beiden anderen L-Schenkeln 50 der Krallen 46 (Figur 2 und 4). Diese Kipp- oder Anstellbewegung in Richtung der beiden Pfeile 76 ist möglich, weil die Wischleiste 20 und damit auch die Deckleiste 40 aus einem gummielastischen Material besteht. Wenn das Wischblatt 12, 12, 20 die in Figur 4 dargestellte Zwischenmontageposition erreicht hat kann der Halter 16 in Richtung des Montagepfeiles 78 auf das Wischblatt aufgebracht werden, wobei dieses in einen Raum 80 gelangt, der von dem Körper 42 und den Krallen 46 des Halters teilweise umschlossen ist. Danach wird das Wischblatt 12, 12, 20 freigegeben, so daß die Tragschienen 12 in die Krallen 46 gelangen und dort ihre vorschriftsmäßige Betriebsposition erreichen (Figur 2). Durch die schon beschriebene Differenz zwischen dem Abstandsmaß 60 und dem Summenmaß 62, 62, 64 ergibt sich nun eine elastische Verformung des Längssteges 36 und die so erzeugte Spannung drückt die Tragschienen 12 mit ihren Außenkanten 52 gegen die Innenseiten der einen L-Schenkel 48. Diese Spannung sorgt für eine ordnungsgemäße Fixierung des Wischblatts im Halter 16. Unter dieser Spannung dringen die Vorsprünge 116 bzw. 216 bzw. 316 in den Längssteg 36 der Wischleiste 20 ein und sorgen für eine zuverlässige Festlegung der Tragschienen 19 in ihren Längsnuten 32. Bei der Ausführung der Tragschienen 312 gemäß Figur 9 drücken die Vorsprünge 316 Material des Längssteges 36 in die Rücksprünge 318 der anderen Tragschiene 312. Es ist klar, daß die Konstruktion des Halters 16 so ausgelegt sein muß, daß die vom Längssteg 36 ausgehende Haltespannung ohne nachteilige Verformung der Krallen 46 und/oder des Basisteils 28 vom Halter aufgenommen wird. Dazu gehört auch eine entsprechende Material-Auswahl, beispielsweise die Verwendung eines Metalls bzw. eines Kunststoffs.

Im Hinblick auf eine besonders stabile Halterung des Wischblatts im Halter 16 kann es von Vorteil sein, wenn die Abstimmung zwischen Halter und Wischblatt so getroffen ist, daß die unteren Bandflächen 19 miteinander einen Winkel α einschließen, der kleiner als 180° ist. Das Prinzip dieser Ausgestaltung ist in Figur 5 aufgezeigt, wobei die Unterseiten 19 der beiden Tragschienen 12 sowie die Wischleiste 20 als strichpunktierte Linien dargestellt sind.

## Patentansprüche

1. Wischblatt für Scheiben von Kraftfahrzeugen mit einer an der Scheibe (14) anlegbaren, langgestreckten, gummielastischen Wischleiste (20), die an ihren beiden Längsseiten (30) mit in einer etwa parallel zur Scheibe liegenden Ebene angeordneten, randoffenen Längs-Aufnahmenuten (32) versehen ist, in welchen jeweils eine bandartig langgestreckte, federelastische Tragschiene (12) untergebracht ist, deren einander zugewandten Innenkanten an einem zwischen den Nuten (32) verbleibenden Längssteg (36) der Wischleiste anliegen und die beiden Tragschienen (12) durch einen an den von der Scheibe abgewandten, oberen Bandflächen (13) der Tragschienen angeordneten Halter (16) quer zu ihrer Längserstreckung in ihren Aufnahmenuten gesichert sind, wobei der Halter mit L-förmigen Krallen (46) versehen ist, deren erster L-Schenkel (48) die Außenkanten (52) der Tragschienen quert und der zweite L-Schenkel (50) die jeweilige Tragschiene (12) untergreift, **dadurch gekennzeichnet, daß** der quer zur Längserstreckung des Wischblatts (10) gemessene Abstand (60) zwischen den einander zugewandten Innenkanten der ersten L-Schenkel (48) kleiner ist als das sich aus der Breite (62) der beiden Tragschienen (12) zuzüglich der Breite (46) des Längssteges (36) der Wischleiste (20) ergebende Summenmaß in demontiertem Zustand.

2. Wischblatt nach Anspruch 1 **dadurch gekennzeichnet, daß** die beiden Tragschienen (12) jeweils zumindest über einen Längsabschnitt mit einem Randstreifen aus ihren Aufnahmenuten (32) ragen und daß die zweiten L-Schenkel (50) an der der Scheibe (14) zugewandten unteren Bandfläche (19) ihrer Tragschienen (12) angreifen.

3. Wischblatt nach einem der Ansprüche 1 oder 2, **dadurch gekennzeichnet, daß** der Halter (16) einen plattenartigen, sich an den oberen Bandflächen (13) der Tragschienen (12) abstützenden Körper (42) aufweist, mit dessen einander gegenüberliegenden Längsseiten (44) die ersten L-Schenkel (48) der Krallen (46) verbunden sind.

4. Wischblatt nach einem der Ansprüche 1 bis 3, **dadurch gekennzeichnet, daß** die Krallen (46) an den Längsseiten (44) einander gegenüberliegend paarweise angeordnet sind.

5. Wischblatt nach einem der Ansprüche 3 oder 4, **dadurch gekennzeichnet, daß** der Körper (42) des Halters (16) an seiner den oberen Bandflächen (13) der beiden Tragschienen (12) zugewandten Unterseite mit einer Längsaussparung (54) zum Aufnehmen einer die Breite der beiden Aufnahmenuten (32) begrenzende Deckleiste (40) der Wischleiste (20) versehen ist.

6. Wischblatt nach einem der Ansprüche 1 bis 5, **dadurch gekennzeichnet, daß** der Halter (16) mit Mitteln (48) zum Anschließen des Wischerarms (18) versehen ist.

7. Wischblatt nach einem der Ansprüche 1 bis 6, **dadurch gekennzeichnet, daß** die unteren Bandflächen (19) der beiden Tragschienen (12) miteinander einen Winkel (α) einschließen, der kleiner als 180° ist.

8. Wischblatt nach einem der Ansprüche 1 bis 7, **dadurch gekennzeichnet, daß** der Halter (16) aus einem Kunststoff hergestellt ist.

9. Wischblatt nach einem der Ansprüche 1 bis 7, **dadurch gekennzeichnet, daß** der Halter (16) aus einem Metall hergestellt ist.

10. Wischblatt nach einem der Ansprüche 1 bis 9, **dadurch gekennzeichnet, daß** jede Tragschiene (112 bzw. 212 bzw. 312) an ihren dem Längssteg (36) der Wischleiste (20) zugewandten Innen-Längskanten (114 bzw. 214 bzw. 314) mit wenigstens einem Vorsprung (116 bzw. 216 bzw. 316) versehen ist.

11. Wischblatt nach Anspruch 10, **dadurch gekennzeichnet, daß** der Vorsprung (116) der einen Tragschiene (112) dem Vorsprung (116) der anderen Tragschiene (112) gegenüber liegt.

12. Wischblatt nach Anspruch 10, **dadurch gekennzeichnet, daß** der Vorsprung (216) der einen Tragschiene (212) zu dem Vorsprung (216) der anderen Tragschiene (212) in deren Längsrichtung versetzt angeordnet ist.

13. Wischblatt nach Anspruch 10, **dadurch gekennzeichnet, daß** dem Vorsprung (316) der einen Tragschiene (312 bzw. 313) ein Rücksprung (318) der anderen Tragschiene (313 bzw. 312) gegenüber liegt.

14. Verfahren zum Montieren eines nach einem der Ansprüche 1 bis 13 ausgebildeten Wischblatts, **dadurch gekennzeichnet, daß** die Tragschienen (12) in ihre Aufnahmenuten (32) eingebracht und ihre oberen Bandflächen (13) so gegeneinander gekippt werden, daß sie einen Winkel (β) miteinander einschließen der kleiner als 180° ist, daß danach die Tragschienen (12) zusammen mit der Wischleiste (20) in den zwischen den an den einander gegenüberliegenden Längsseiten (44) des Halters (16) angeordneten Krallen (46) vorhandenen Raum (80) eingebracht werden wo nach dem Freigeben der Tragschienen (12) diese selbsttätig in ihre Betriebspositionen gelangen und dort zusammen mit der Wischleiste (20) durch die sich ergebende Spannung des Längssteges (36) im Halter (16) fixiert werden.

## Claims

1. Wiper blade for motor vehicle panes, having an elongate, rubber-elastic wiper strip (20) which can be placed against the pane (14) and is provided on its two longitudinal sides (30) with longitudinal receiving grooves (32), which are arranged in a plane situated approximately parallel to the pane, are open at the edge and in which a resilient supporting rail (12) which is elongated in the manner of a band is accommodated in each case, the mutually facing inner edges of which rail bear against a longitudinal web (36), remaining between the grooves (32), of the wiper strip and the two supporting rails (12) are secured transversely to their longitudinal extent in their receiving grooves by means of a holder (16), which is arranged on the upper band surfaces (13), facing away from the pane, of the supporting rails, the holder being provided with L-shaped claws (46), of which the first L-leg (48) crosses the outer edges (52) of the supporting rails and the second L-leg (50) engages under the particular supporting rail (12), **characterized in that** the distance (60) between the mutually facing inner edges of the first L-legs (48), which distance is measured transversely with respect to the longitudinal extent of the wiper blade (10), is smaller than the sum total arising from the width (62) of the two supporting rails (12) plus the width (46) of the longitudinal web (36) of the wiper strip (20) in the removed state.

2. Wiper blade according to Claim 1, **characterized in that** the two supporting rails (12) in each case protrude out of their receiving grooves (32) by means of an edge strip at least over a longitudinal section, and **in that** the two L-legs (50) act on the lower band surface (19) of their supporting rails (12), which surface faces the pane (14).

3. Wiper blade according to either of Claims 1 and 2, **characterized in that** the holder (16) has a plate-like body (42) which is supported on the upper band surfaces (13) of the supporting rails (12) onto the mutually opposite longitudinal sides (44) of which the first L-legs (48) of the claws (46) are connected.

4. Wiper blade according to one of Claims 1 to 3, **characterized in that** the claws (46) are arranged in pairs opposite one another on the longitudinal sides (44).

5. Wiper blade according to either of Claims 3 and 4, **characterized in that** the body (42) of the holder (16) is provided on its lower side, which faces the upper band surfaces (13) of the two supporting rails (12), with a longitudinal recess (54) for receiving a cover strip (40) of the wiper strip (20), which cover strip delimits the width of the two receiving grooves (32).

6. Wiper blade according to one of Claims 1 to 5, **characterized in that** the holder (16) is provided with means (48) for connecting the wiper arm (18).

7. Wiper blade according to one of Claims 1 to 6, **characterized in that** the lower band surfaces (19) of the two supporting rails (12) enclose with each other an angle (α) which is smaller than 180°.

8. Wiper blade according to one of Claims 1 to 7, **characterized in that** the holder (16) is produced from a plastic.

9. Wiper blade according to one of Claims 1 to 7, **characterized in that** the holder (16) is produced from a metal.

10. Wiper blade according to one of Claims 1 to 9, **characterized in that** each supporting rail (112 or 212 or 312) is provided on its inner longitudinal edges (114 or 214 or 314), which face the longitudinal web (36) of the wiper strip (20), with at least one projection (116 or 216 or 316).

11. Wiper blade according to Claim 10, **characterized in that** the projection (116) of one supporting rail (112) lies opposite the projection (116) of the other supporting rail (112).

12. Wiper blade according to Claim 10, **characterized in that** the projection (216) of one supporting rail (212) is offset with respect to the projection (216) of the other supporting rail (212) in the longitudinal direction thereof.

13. Wiper blade according to Claim 10, **characterized in that** opposite the projection (316) of one supporting rail (312 or 313) is an offset (318) of the other supporting rail (313 or 312).

14. Method for mounting a wiper blade formed according to one of Claims 1 to 13, **characterized in that** the supporting rails (12) are placed into their receiving grooves (32) and their upper band surfaces (13) are tilted towards each other in such a manner that they enclose with each other an angle (β) which is smaller than 180°, **in that** the supporting rails (12) are then placed together with the wiper strip (20) into the space (80) present between the claws (46) arranged on the mutually opposite longitudinal sides (44) of the holder (16), where, after the supporting rails (12) are released, the latter pass automatically into their operating positions and are fixed there together with the wiper strip (20) by means of the resulting stress of the longitudinal web (36) in the holder (16).

## Revendications

1. Raclette d'essuie-glace pour des vitres de véhicule automobile, comprenant une lame d'essuyage (20) allongée, élastique comme du caoutchouc, pouvant être appliquée sur la vitre (14) et qui, sur ses deux côtés longitudinaux (30), présente des rainures d'accueil longitudinales (32) ouvertes latéralement et disposées dans un plan sensiblement parallèle à la vitre avec, à chaque rainure, un rail porteur (12) longitudinal élastique et en forme de bande dont les bords internes tournés l'un vers l'autre sont appliqués sur une barrette longitudinale (36) de la lame d'essuyage située entre les rainures (32), chaque rail porteur (12) étant sécurisé dans sa rainure d'accueil perpendiculairement à sa dimension longitudinale par un support (16) monté sur la face supérieure de bande (13) du rail porteur éloignée de la vitre, ce support étant équipé de griffes (46) en forme de L dont la première branche du L (48) longe le bord externe (52) du rail porteur correspondant, tandis que la seconde branche du L (50) est en prise par-dessous avec ce rail porteur (12),
**caractérisée en ce que**
la distance (60), mesurée perpendiculairement à la direction longitudinale de la lame d'essuyage (10), entre les bords internes tournés l'un vers l'autre des premières branches en L (48) est inférieure à la mesure, résultant de la somme de la largeur (62) des deux rails porteurs (12) et de la largeur (46) de la barre longitudinale (36) de la lame d'essuyage (20) à l'état démonté.

2. Raclette d'essuie-glace selon la revendication 1,
**caractérisée en ce que**
chacun des deux rails porteurs (12) fait saillie hors de la rainure d'accueil (32) correspondante par au moins une bande marginale au-delà de sa partie longitudinale, la seconde branche en L (50) étant en prise sur la portée de bande (19) de son rail porteur (12) située en bas et tournée vers la vitre (14).

3. Raclette d'essuie-glace selon la revendication 1 ou 2,
**caractérisée en ce que**
le support (16) présente un corps (42) en forme de plaque s'appuyant sur les faces supérieures de bande (13) des rails porteurs (12) et il assure la liaison par ses côtés longitudinaux (44) se faisant face entre les premières branches en L (48) et les griffes (46).

4. Raclette d'essuie-glace selon une des revendications 1 à 3,
**caractérisée en ce que**
les griffes (46) sont disposées par paires se faisant face, sur les côtés longitudinaux (44).

5. Raclette d'essuie-glace selon la revendication 3 ou 4,
**caractérisée en ce que**
le corps (42) du support (16) présente sur sa face inférieure tournée vers les faces supérieures de bande (13) des deux rails porteurs (12) un évidement longitudinal (54) pour accueillir une barrette de couverture (40) de la lame d'essuyage (20), délimitant la largeur des deux rainures d'accueil (32).

6. Raclette d'essuie-glace selon une des revendications 1 à 5,
**caractérisée en ce que**
le support (16) est équipé de moyens (48) pour raccorder la lame d'essuyage (18).

7. Raclette d'essuie-glace selon une des revendications 1 à 6,
**caractérisée en ce que**
les faces inférieures de bande (19) des deux rails porteurs (12) font entre elles un angle (α) inférieur à 180°.

8. Raclette d'essuie-glace selon une des revendications 1 à 7,
**caractérisée en ce que**
le support (16) est réalisé en matière plastique.

9. Raclette d'essuie-glace selon une des revendications 1 à 7,
**caractérisée en ce que**
le support (16) est réalisé en métal.

10. Raclette d'essuie-glace selon une des revendications 1 à 9,
**caractérisée en ce que**
chaque rail porteur (112 ou 212 ou 312) porte au moins une saillie (116 ou 216 ou 316)sur ses bords longitudinaux internes (114 ou 214 ou 314) tournés vers la barrette (36) de la lame d'essuyage (20).

11. Raclette d'essuie-glace selon la revendication 10,
**caractérisée en ce que**
la saillie (116) d'un rail porteur (112) se trouve en face de la saillie (116) de l'autre rail porteur (112).

12. Raclette d'essuie-glace selon la revendication 10,
**caractérisée en ce que**
la saillie (216) d'un rail porteur (212) est décalée par rapport à la saillie (216) de l'autre rail porteur (212).

13. Raclette d'essuie-glace selon la revendication 10,
**caractérisée en ce que**
la saillie (316) d'un rail porteur (312 ou 313) se trouve en face d'une partie en retrait (318) de l'autre rail porteur (313 ou 312).

14. Procédé de montage d'une lame d'essuyage réalisée selon une des revendications 1 à 13,
**caractérisé en ce que**
- les rails porteurs (12) sont montés dans leurs rainures d'accueil (32) avec leurs surfaces supérieures de bande (13) inclinées l'une par rapport à l'autre de manière à former entre elles un angle (β), inférieur à 180°C,
- ensuite les rails porteurs (12) sont introduits avec la lame d'essuyage (20) dans l'espace (80) existant entre les griffes (46) situées sur les bords longitudinaux (44) se faisant face du support (16),
- après libération des rails porteurs (12), ceux-ci parviennent automatiquement à leur position de fonctionnement et se trouvent fixés avec la lame d'essuyage (20), dans le support (16) par la tension que présente la barre longitudinale (36).
